# EUROPEAN PATENT SPECIFICATION

(11) **EP 0 700 517 B1**
(45) Date of publication and mention of the grant of the patent: **05.01.2000**
(21) Application number: 94920680.9
(22) Date of filing: 20.05.1994
(51) Int. Cl.: G01N 27/12

(54) **SENSORS FOR SULFUR ACTIVITY MEASUREMENTS**
SENSOREN ZUR MESSUNG DER SCHWEFELAKTIVITÄT
APPAREIL DE MESURE DE L'ACTIVITE SULFURIQUE

(30) Priority: 20.05.1993 US 64262; 18.05.1994 US 245341
(43) Date of publication of application: 13.03.1996
(73) Proprietor: EXXON RESEARCH AND ENGINEERING COMPANY, Florham Park, New Jersey 07932-0390 (US)
(72) Inventor: RAMANARAYANAN, Trikur, A., Somerset, NJ 08873 (US); PAREEK, Vinod, K., Flemington, NJ 08822 (US); MUMFORD, James, D., Long Valley, NJ 07853 (US); WITZKE, Horst, Flemington, NJ 08822 (US)
(74) Representative: Somers, Harold Arnold
(86) International application number: US9405757
(87) International publication number: WO9428399

(56) References cited:
- US-A- 3 437 446
- US-A- 3 558 280
- US-A- 4 147 515
- US-A- 4 406 754
- US-A- 4 507 643
- US-A- 4 885 929
- US-A- 5 082 789
- NODDACK et al., "The Electrochemical Series of the Sulfides", Z. Electrochem., Vol. 59, (1955), pages 752-755.

## Description

The present invention relates to the measurement of thermodynamic sulfur activity in a process environment and, in particular, relates to a sensor and a method for such measurement.

In many processes, for example in the refining of crudes or in sour gas production wells, there is a significant need to measure the thermodynamic activity of sulfur which is established in the environment by the interplay of the various sulfur containing corrosive species. Sulfur activity is a well known measure of the available sulfur for reaction (see e.g., "An Analysis of the Phase Equilibria in the Fe-FeS System", Metallurgical Transactions B, p. 37-41, Vol. 6B, March 1975). To provide operational flexibility in these environments, it is of great interest to predict the rates of corrosion. Typically, these environments exhibit temperature in the range 65.6°C to 537.8°C (150°F to 1000°F). The thermodynamic activity of sulfur can be used as a generalized index of corrosivitity. Thus, if the sulfur activity can be directly measured by means of a sensor, this will provide a determination of corrosivity prediction.

US-A-4 406 754 describes a method and a probe for the determination of sulfur levels in, particularly, molten metals or gases. The probe effectively comprises a cell for measuring electromotive force generated between (i) a reference electrode of metal/metal sulfide mixturc and (ii) a counter electrode comprising said molten metals or gases, through a solid sulfide electrolyte having an electrical conductivity in the region of ionic conduction.

The present invention relates to a sensor and a method to determine the sulfur activity in a given environment (such as a feedstream) from conductivity measurement. This sulfur activity can be related to the sulfur concentration in the environment.

In one aspect, the invention provides a sensor for determining sulfur activity in a sulfur-containing environment comprising:
(a) a non-stoichiometric semi-conducting metal sulfide, M_{α-x}S whose p-type or n-type conductivity varies with sulfur activity, where M is a metal, α is the metal to sulfur ratio in the binary sulfide when there is no deviation from stoichiometry and x is the deviation from stoichiometry, and where the maximum value of x is between 0.002 and 0.5;
(b) electrodes attached to said sulfide; and
(c) means for measuring the p-type or n-type conductivity of said sulfide and correlating said conductivity with the sulfur activity.

In another aspect, the invention provides a method for determining sulfur activity in a sulfur-containing environment having a temperature less than 1000°F (537.8°C), comprising employing the afore-described sensor.

In a preferred embodiment, the sulfide is iron sulfide (pyrrhotite) or cuprous sulfide.

The sensor is placed in an environment whose sulfur activity is to be determined. The conductivity and hence, resistivity of the sulfide is measured. The corresponding sulfur activity and sulfur concentration may then be determined from a calibration curve of the conductivity (or resistivity) vs. sulfur activity.

### BRIEF DESCRIPTION OF THE DRAWINGS

Figure 1 shows the resistivity (inverse of conductivity) of a cuprous sulfide foil as a function of the sulfur activity at 537.8°C (1000°F). The sulfur activity was established using equilibrated H₂S/H₂ mixtures.

Figure 2 shows the resistivity (inverse of conductivity) of an iron sulfide foil as a function of the sulfur activity in the H₂S/H₂ mixture at 537.8°C (1000°F).

Figure 3 shows a schematic diagram of an embodiment the sensor of the present invention.

### DESCRIPTION OF THE PREFERRED EMBODIMENT

The present invention includes a method and a device to determine the sulfur activity in a given environment (such as a feed stream) at a temperature which will be limited to below 537.8°C (1000°F) for such applications. One of the elements of the device is a non-stoichiometric metal sulfide M_{α-x}S whose metal to sulfur ratio (α-x) varies over a wide range and whose conductivity varies with sulfur activity. The measurement of conductivity variation is made possible by the rapid diffusion of metal ions in these non-stoichiometric sulfides. The non-stoichiometry of the binary sulfide M_{α-x}S is defined by the deviation, x of the M/S ratio from the stoichiometric constant, α. α is defined as the metal to sulfur ratio in the binary sulfide when there is no deviation from stoichiometry. For the sulfides of the present invention, the maximum value of x (xₘₐₓ) is in the range 0.002 <xₘₐₓ<0.5. In a preferred embodiment, xₘₐₓ is in the range 0.02<xₘₐₓ<0.5. Examples of sulfides of our invention are Cu₂₋ₓS (xₘₐₓ=0.23), Fe₁₋ₓS (xₘₐₓ=0.25). The larger non-stoichiometry range allows rapid atomic diffusion in the temperature range (below 537.8°C (1000°F)) where sensors are used. The non-stoichiometry of the sulfides is due to the metal deficiency on the cation lattice while the anion lattice is nearly perfect. The sensor also includes electrodes attached to the sulfide and a means for measuring the electrical conductivity of the said sulfide and correlating the conductivity with the sulfur activity.

The sensor includes a non-stoichiometric sulfide which in general is a p-type or n-type semi-conductor. The presence of metal vacancies balanced by electron holes provides semi conduction in the former case while metal interstitials balanced by excess electrons causes semi conduction in the latter case. The measured total conductivity is essentially equal to the p-type or the n-type conductivity which is proportional to the metal deficit or metal excess of the sulfide, which in turn is directly related to the sulfur chemical potential or activity of the environment. Metal sulfides useful in the present invention include Cu₂₋ₓS, Fe₁₋ₓS, Co₁₋ₓS, Ni₃S_{2±x}.

One method of practising this invention is to prepare thin self supporting foils of the non-stoichiometric sulfide sensor and use four probe d.c. techniques to measure its electrical conductivity.* This can be done by first starting with a metal foil to which inert metal electrodes are spot welded. The foil/electrode assembly is then exposed to a controlled sulfur environment whereby the metal foil is converted to the non-stoichiometric sulfide sensor element. The sensor is then ready for placement in the process stream. The steady state conductivity of the foil provides a measure of the sulfur activity of the stream.
* as described by L.J. vander Pauw in "Method of Measuring Specific Resistivity and Hall Effect of Discs of Arbitrary Shape", Philips Research Reports , Vol. 13, No. 1, pages 5 and 6, 1958.

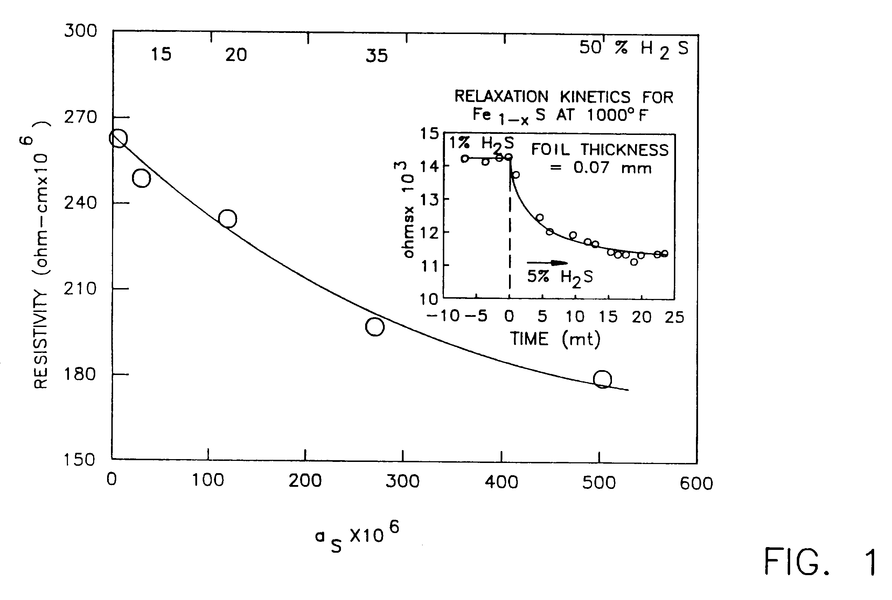

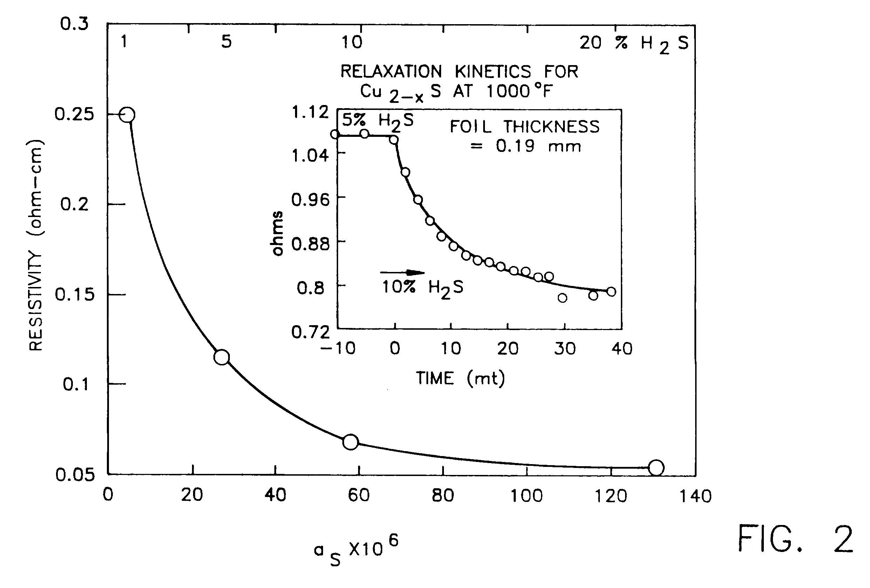

The sulfur activity-conductivity relationship for the sulfur sensors may be determined by using iron foils and copper foils in H₂S/H₂ mixtures of known sulfur activity. The foils convert to the corresponding sulfides. Figures 1 and 2 show the resistivity (inverse of conductivity) of cuprous sulfide and iron sulfide foils respectively as a function of the sulfur activity in the H₂S/H₂ mixture at 537.8°C (1000°F). These figures serve as a calibration plot of conductivity vs. sulfur activity. Shown in the inset are relaxation curves of the variation of resistivity with time when the environment is changed from one sulfur content to another. This provides a measure of the response time of the sensor at 537.8°C (1000°F).

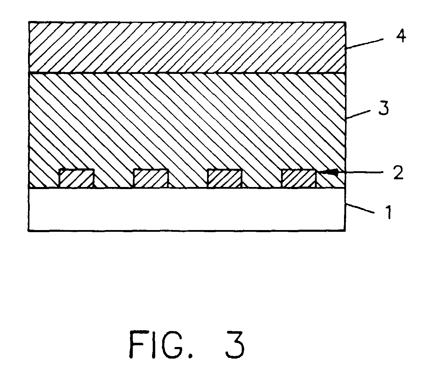

The sensor may be made more durable by replacing the sulfide foils with thin sulfide films deposited on a non-conductive ceramic substrate (see Figure 3). This will provide for enhanced mechanical integrity as well as faster response times. A suitable substrate (1) could be a ceramic wafer with conductive electrodes (2) formed by thin or thick film techniques which are well known in the art. One method of practicing this invention is to deposit a thin film of the metal by sputtering or evaporation and subsequently converting the metal film into a sulfide (3). Another technique could be to deposit the metal sulfide layer in a single step by reactive sputter deposition. Such thin film deposition techniques are also well known in the art.

In many process streams, erosive damage of sensor components can occur because of particulate and velocity effects. The sensor of the present invention may include an erosion resistant porous ceramic layer (4) between the sensor and the process stream. Such a membrane layer could be formed by solgel techniques, for example.

## Claims

1. A sensor for determining sulfur activity in a sulfur-containing environment comprising:
(a) a non-stoichiometric semi-conducting metal sulfide, M_{α-x}S whose p-type or n-type conductivity varies with sulfur activity, where M is a metal, α is the metal to sulfur ratio in the binary sulfide when there is no deviation from stoichiometry and x is the deviation from stoichiometry, and where the maximum value of x is between 0.002 and 0.5;
(b) electrodes attached to said sulfide; and
(c) means for measuring the p-type or n-type conductivity of said sulfide and correlating said conductivity with the sulfur activity.

2. The sensor of claim 1, wherein said sulfide is iron sulfide or copper sulfide.

3. The sensor of claim 1 or claim 2, wherein said sulfide is a thin self-supporting foil.

4. The sensor of claim 1 or claim 2, wherein said sulfide is a thin film deposited on a substrate.

5. The sensor of claim 5, wherein said substrate is a ceramic material.

6. The sensor of any one of claim 1, 2, 4 and 5, further comprising a porous, corrosion and erosion resistant layer between said sulfide and said environment.

7. A method for determining sulfur activity in a sulfur-containing environment having a temperature less than 1000°F (537.8°C), comprising employing the sensor claimed in any preceding claim.

## Patentansprüche

1. Sensor zur Bestimmung der Schwefelaktivität in einer schwefelhaltigen Umgebung, der umfaßt:
(a) ein nicht-stöchiometrisches halbleitendes Metallsulfid, M_{α-x}S, dessen Leitfähigkeit vom p-Typ oder n-Typ mit der Schwefelaktivität variiert, wobei M ein Metall ist, α das Metall zu Schwefel-Verhältnis in dem binären Sulfid ist, wenn keine Abweichung von der Stöchiometrie vorliegt, x ist die Abweichung von der Stöchiometrie ist und der Maximalwert von x 0,002 bis 0,5 beträgt;
(b) an dem Sulfid angebrachte Elektroden und
(c) Mittel zur Messung der Leitfähigkeit des Sulfids vom p-Typ oder n-Typ und zur Korrelation der Leitfähigkeit mit der Schwefelaktivität.

2. Sensor nach Anspruch 1, bei dem das Sulfid Eisensulfid oder Kupfersulfid ist.

3. Sensor nach Anspruch 1 oder Anspruch 2, bei dem das Sulfid eine dünne selbsttragende Folie ist.

4. Sensor nach Anspruch 1 oder Anspruch 2, bei dem das Sulfid eine dünne auf einem Substrat abgelagerte Folie ist.

5. Sensor nach Anspruch 4, bei dem das Substrat keramisches Material ist.

6. Sensor nach einem der Ansprüche 1, 2, 4 und 5, der ferner eine poröse, korrosions- und erosionsbeständige Schicht zwischen dem Sulfid und der Umgebung umfaßt.

7. Verfahren zur Bestimmung der Schwefelaktivität in einer schwefelhaltigen Umgebung mit einer Temperatur unter 1000°F (537,8°C), bei dem ein Sensor gemäß einem der vorhergehenden Ansprüche verwendet wird.

## Revendications

1. Appareil de mesure pour déterminer l'activité du soufre dans un environnement contenant du soufre, comprenant :
(a) un sulfure métallique semi-conducteur non stoechiométrique, M_{α-x}S, dont la conductivité de type p ou de type n varie avec l'activité du soufre, où M est un métal, α est le rapport du métal au soufre dans le sulfure binaire lorsqu'il n'y a pas d'écart par rapport à la stoechiométrie et x est l'écart par rapport à la stoechiométrie, et où la valeur maximale de x se situe entre 0,002 et 0,5;
(b) des électrodes fixées audit sulfure; et
(c) un moyen pour mesurer la conductivité de type p ou de type n dudit sulfure et mettre en corrélation ladite conductivité avec l'activité du soufre.

2. Appareil de mesure selon la revendication 1, dans lequel ledit sulfure est du sulfure de fer ou du sulfure de cuivre.

3. Appareil de mesure selon la revendication 1 ou 2, dans lequel ledit sulfure est une couche mince autoportante.

4. Appareil de mesure selon la revendication 1 ou 2, dans lequel ledit sulfure est une couche mince déposée sur un substrat.

5. Appareil de mesure selon la revendication 5, dans lequel ledit substrat est un matériau céramique.

6. Appareil de mesure selon l'une quelconque des revendications 1, 2, 4 et 5, comprenant par ailleurs une couche poreuse résistant à la corrosion et à l'érosion entre ledit sulfure et ledit environnement.

7. Procédé de détermination de l'activité du soufre dans un environnement contenant du soufre ayant une température inférieure à 537,8°C (1000°F), comprenant l'utilisation de l'appareil de mesure selon l'une quelconque des revendications précédentes.
